# EUROPÄISCHE PATENTSCHRIFT

(11) **EP 0 767 309 B1**
(45) Veröffentlichungstag und Bekanntmachung des Hinweises auf die Patenterteilung: **20.09.2000**
(21) Anmeldenummer: 96112479.9
(22) Anmeldetag: 02.08.1996
(51) Int. Cl.: F04D 29/02, F04D 29/42, B29C 41/06

(54) **Verfahren zur Herstellung eines Dachventilatorgehäuses**
fabrication method for a roof ventilator
Procédé de fabrication d'un boîtier pour un ventilateur de toit

(30) Priorität: 10.08.1995 DE 19529400
(43) Veröffentlichungstag der Anmeldung: 09.04.1997
(73) Patentinhaber: Funken & Co. GmbH, 53773 Hennef (DE)
(72) Erfinder: Severyns, Horst Willy, 53844 Troisdorf (DE)
(74) Vertreter: Brandenburg, Thomas, Dr.

(56) Entgegenhaltungen:
- FR-A- 2 624 923
- US-A- 3 412 928
- US-A- 3 970 736
- PLASTIQUES MODERNES ET ELASTOM RES, Bd. 34, Nr. 7, September 1982, PARIS, Seiten 80-81, XP002019166 "Le rotomoulage fait des adeptes"

## Beschreibung

Die Erfindung betrifft ein Verfahren zur Herstellung eines Kunststoff-Dachventilatorgehäuses (z.B. US-A-3412928) aus einem Gehäuseunterteil mit einem Flansch am oberen Rand und einem Gehäuseoberteil mit einem Flansch am unteren Rand. Die Erfindung betrifft auch ein Dachventilatorgehäuse.

Dachventilatoren haben eine Ansaugöffnung an ihrer Unterseite und eine Abblasöffnung an der Oberseite des Gehäuses, das im allgemeinen axialsymmetrisch geformt ist und aus dem Unterteil und dem Oberteil mit einer Flanschverbindung zwischen ihnen besteht. Bisher werden diese Gehäuseteile durch Tiefziehen aus ebenem Plattenmaterial hergestellt. Dieses Verfahren ist durch den dabei entstehenden Abfall materialaufwendig. Das Verfahren ist auch arbeitsaufwendig, da die beiden Gehäuseteile getrennt hergestellt werden müssen und eine erhebliche Nachbearbeitung erfordern. Die Wandstärke der Gehäuseteile ist durch das Tiefziehen unterschiedlich, so daß in bestimmten Fällen Versteifungsrippen nötig sein können. Die Innenkanten der Gehäuseteile sind scharf ausgeprägt, wodurch das Strömungsgeräusch verstärkt wird.

Der Erfindung liegt die Aufgabe zugrunde, ein Verfahren zur Herstellung eines Dachventilatorgehäuses aus Kunststoff mit verringertem Material- und Arbeitsaufwand und damit reduzierten Fertigungskosten zu schaffen. Ferner soll ein Verfahren zur Herstellung eines Dachventilatorgehäuses aus Kunststoff geschaffen werden, das sich im Vergleich zu bisherigen Fertigungsverfahren für Dachventilatorgehäuse durch erheblich geringere Investitionskosten für die Fertigungseinrichtung auszeichnet. Weiter ist es Aufgabe der vorliegenden Erfindung, ein Verfahren zur Herstellung eines Dachventilatorgehäuses zu schaffen, bei dem Änderungen an der Gehäuseform leicht möglich sind. Ferner ist es Aufgabe der Erfindung, ein Dachventilatorgehäuse aus Kunststoff mit gleichmäßiger Wandstärke zu schaffen, um so das Gehäuse mit minimalem Materialeinsatz zu realisieren. Schließlich soll ein Dachventilatorgehäuse mit vermindertem Strömungsgeräusch geschaffen werden. Weitere Vorteile der Erfindung ergeben sich aus der folgenden Beschreibung.

Diese Aufgabe wird bei dem eingangs genannten Verfahren erfindungsgemäß dadurch gelöst, daß man durch Rotationsgießen einen allseitig geschlossenen Gehäuseformling aus zusammengeformtem Gehäuseunterteil und Gehäuseoberteil bildet, den Gehäuseformling unter Bildung des Gehäuseunterteils und Gehäuseoberteils trennt und in die beiden Gehäuseteile die Anström- und Abströmöffnungen einschneidet. Durch Rotationsgießen wird zunächst ein Gehäuseformling hergestellt, in dem das Gehäuseoberteil und das Gehäuseunterteil bereits vorgebildet sind, so daß der Formling nur längs seines Umfangs getrennt zu werden braucht, um aus ihm die beiden Gehäuseteile zu erhalten. Diese Art der Fertigung ist kostengünstiger als die Herstellung des Ober- und Unterteils durch zwei getrennte Tiefziehvorgänge. Nach der Trennung des Formlings in die beiden Gehäuseteile werden noch die in ihnen benötigten Öffnungen, insbesondere die Strömungsöffnungen für das zu fördernde Gas, in die Gehäuseteile eingeschnitten.

Zur Bildung der Gehäuseformlinge wird die in der Symmetrieebene geteilte Rotationsgießform mit der für die Bildung des Gehäuses erforderlichen Kunststoffpulvermenge beschickt. Die Formteile werden geschlossen und zusammengeschraubt. Die beschickte Form wird dann auf eine Temperatur über dem Schmelzpunkt des Kunststoffpulvers erhitzt und gleichzeitig um zwei Achsen gedreht, die zueinander senkrecht stehen. Das Kunststoffpulver schmilzt während der Erhitzung und Rotation und verteilt sich gleichmäßig über die Innenseite der Form. Wenn sich das gesamte Pulver zu einer homogenen Schicht auf der Innenseite der Formwandung verteilt hat, wird die Form langsam abgekühlt. Nach genügender Abkühlung unter den Erweichungspunkt des Kunststoffs wird die Form geöffnet und der fertige Gehäuseformling aus der Form entnommen. Aus diesem Formling werden dann durch Trennung die Gehäuseteile bzw. Abdeckhauben hergestellt.

Nach der bevorzugten Ausführungsform des erfindungsgemäßen Verfahrens bildet man einen Gehäuseformling aus an ihren Flanschen verbundenem Gehäuseunterteil und Gehäuseoberteil und trennt die Verbindung zwischen den Flanschen beider Gehäuseteile. Die durchzutrennende Verbindung zwischen den Flanschen kann im Prinzip an beliebiger Stelle zwischen den beiden einander gegenüberliegenden Flanschen sein. Vorzugsweise sind die beiden Flansche an ihren Außenrändern miteinander verbunden, so daß bei der Trennung an dem Flansch des Oberteils ein nach unten ragender, den Flansch des Unterteils seitlich übergreifender Kragen entsteht, wodurch die Verschraubung geschützt wird.

In weiterer Ausgestaltung der Erfindung bildet man durch Rotationsgießen einen aus zwei an ihren Rändern verbundenen Motorabdeckhauben bestehenden Haubenformling, trennt den Haubenformling in der Mitte unter Bildung von zwei Hauben und bringt man eine Haube mittels eines Lüftungsrohres in dem Gehäuseoberteil an. Durch das Rotationsgießen der bisher ebenfalls durch Tiefziehen hergestellten Motorabdeckhaube (Schutz des Motors gegen einfallenden Regen) können die Fertigungskosten für das Gehäuse weiter gesenkt werden.

Vorzugsweise gießt man beim Rotationsgießen in einen der Flansche Gewindebuchsen ein. Die Gewindebuchsen für die Verbindung der beiden Gehäuseteile sind somit von der Gießfertigung her in dem Gehäuseteil enthalten und brauchen nicht wie bei anderen Herstellungsverfahren, z.B. dem Tiefziehverfahren, in den Flansch nachträglich eingesetzt zu werden. Darüber hinaus können auch andere metallische oder nichtmetallische Körper in den Formling eingegossen werden.

Die Aufgabe wird ausgehend von einem Dachventilatorgehäuse aus einem Gehäuseunterteil mit einer Anströmöffnung an der Unterseite und einem Flansch am oberen Rand und einem Gehäuseoberteil mit einer Abströmöffnung an der Oberseite und einem Flansch am unteren Rand vorrichtungsmäßig dadurch gelöst, daß die beiden Gehäuseteile als Teile eines Rotationsgußkörpers ausgebildet sind, die an- und abströmseitige Öffnungen enthalten. Das erfindungsgemäße Gehäuse ist im Vergleich zu einem tiefgezogenen Gehäuse nicht nur kostengünstiger, sondern es hat auch eine gleichmäßigere Wandstärke und erzeugt ein geringeres Strömungsgeräusch.

Nach der bevorzugten Ausführungsform des Dachventilatorgehäuses besteht der Rotationsgußkörper aus den beiden im Bereich ihrer Flansche verbundenen Gehäuseteilen und sind die Gehäuseteile die durch Trennung des Rotationsgußkörpers zwischen den Flanschen gebildeten Teile. Der Rotationsgußkörper kann z.B. durch Sägen oder Fräsen getrennt werden.

Zweckmäßigerweise sind in dem Gehäuseoberteil zwei einander diametral gegenüberliegende Öffnungen ausgebildet, in denen ein Lüftungsrohr aufgenommen ist, und ist eine als Rotationsgußkörper ausgebildete, in das Lüftungsrohr mündende Motorabdeckhaube in dem Gehäuseoberteil angebracht. Die Anbringung kann z.B. durch Anschweißen der Haube an dem Lüftungsrohr erfolgen. Zweckmäßigerweise hat das Lüftungsrohr Öffnungen, durch die die Haube mit dem Innenraum des Rohres in Verbindung steht, so daß Luft aus dem von der Abdeckhaube umgebenen Motorraum nach außen abströmen kann. Das Lüftungsrohr kann die Haube senkrecht zur Haubenachse ebenso wie das Gehäuseoberteil durchstoßen, wobei in der Haube entsprechende Öffnungen an diametral gegenüberliegenden Stellen der Haubenwandung vorzusehen sind.

Zweckmäßigerweise enthält einer der Flansche eingegossene Gewindebuchsen für die Schraubverbindung der beiden Gehäuseteile.

Eine Ausführungsform des erfindungsgemäßen Dachventilatorgehäuses wird nun an Hand der Zeichnung näher beschrieben. Es zeigen
Figur 1 die Seitenansicht des durch Rotationsgießen hergestellten Gehäuseformlings;
Figur 2 den Axialschnitt des Gehäuseformlings;
Figur 3 eine vergrößerte Darstellung der Flanschverbindung des Gehäuseformlings;
Figur 4 den Axialschnitt eines Dachventilators mit dem erfindungsgemäßen Gehäuse; und
Figur 5 den Axialschnitt des Haubenformlings.

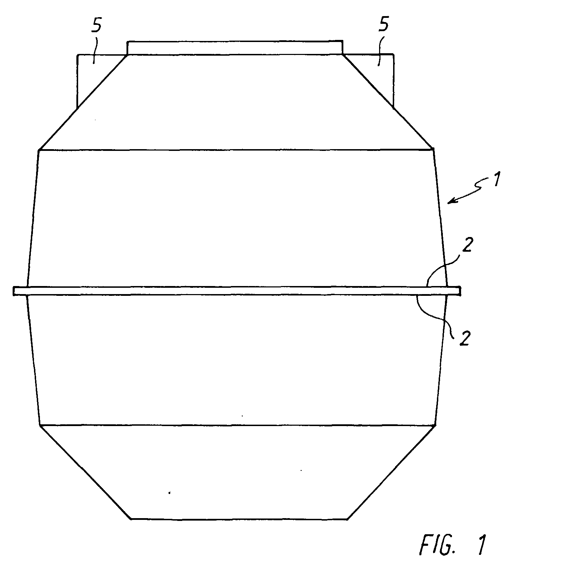

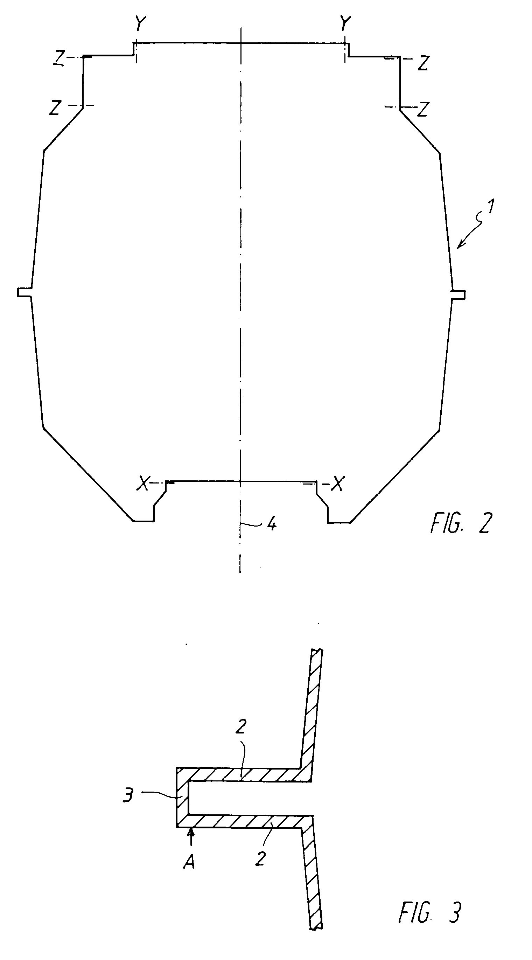

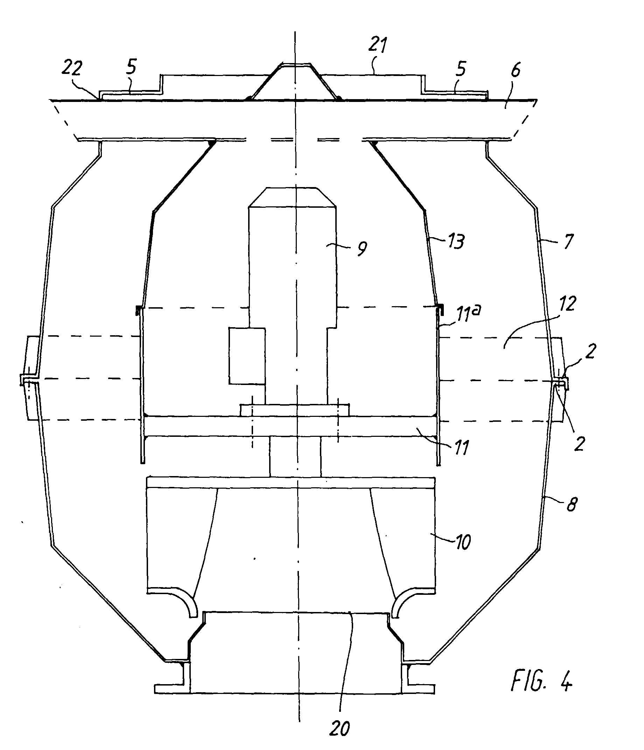

Die Figuren 1 bis 3 zeigen einen durch Rotationsgießen hergestellten Gehäuseformling, aus dem die beiden Gehäuseteile gebildet werden. Etwa in der Mitte hat der Formling zwei Flansche 2, die bei dieser Ausführungsform durch den ringförmigen Steg 3 zusammenhängen. Der Formling 1 ist zu seiner Achse 4 rotationssymmetrisch mit Ausnahme der beiden einander diametral gegenüberliegenden Manschetten 5 für die Fassung eines Lüftungsrohres 6 (vergl. Figur 4). Zur Bildung der beiden Gehäuseteile aus dem Formling 1 wird dieser zwischen dem unteren Flansch 2 und dem Ringsteg 3 an der mit A bezeichneten Stelle (Figur 3) getrennt. Ferner ist im Unterteil zur Öffnung der Anströmdüse längs der Schnittspur X-X eine Scheibe auszuschneiden. Ferner wird durch einen kreisförmigen Schnitt längs der Spur Y-Y die Abströmöffnung des Oberteils geöffnet. Außerdem sind die Manschetten 5 bei Z-Z unter Bildung der Öffnungen 22 aufzuschneiden, damit das Lüftungs rohr 6 (Figur 4) eingesetzt werden kann.

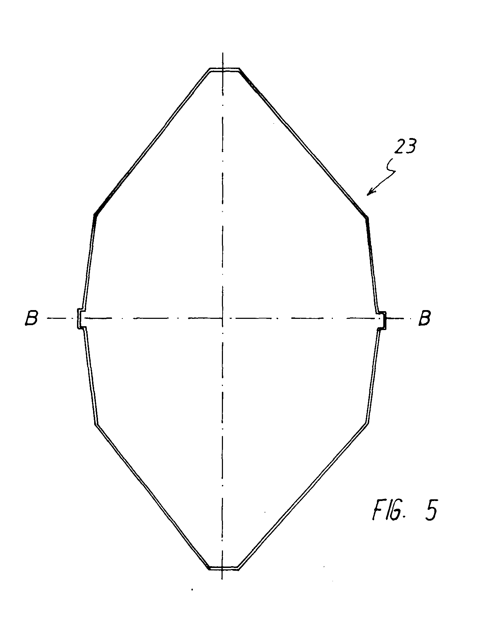

Figur 4 zeigt den Dachventilator mit dem aus dem Formling 1 hergestellten Gehäuse aus dem Oberteil 7 und dem Unterteil 8, die über ihre Flansche 2 verbunden und mit den nötigen Öffnungen 20, 21 versehen sind. Der Motor 9 mit dem Laufrad 10 ist auf einer Platte 11 befestigt, die auch eine Seitenwand 11^{a} trägt. Der gesamte Einbau ist über gestrichelt dargestellte Arme 12 in Aussparungen des Gehäuseoberteils 7 und Gehäuseunterteils 8 gelagert. Auf die Seitenwand 11^{a} ist eine Abdeckhaube 13 aufgesetzt, die im oberen Teil von dem Lüftungsrohr 6 durchstoßen ist und mit dessen Innenraum verbunden ist. Die Abdeckhaube 13 ist ebenfalls durch Rotationsgießen hergestellt. Figur 5 zeigt einen so hergestellten Haubenformling 23. Durch Halbierung dieses Formlings längs der Schnittspur B-B und Einschneiden der Öffnungen für das Lüftungsrohr 6 lassen sich die Hauben 13 in kostengünstiger Weise fertigen.

Das Ventilatorgehäuse und auch die Motorabdeckhauben können erfindungsgemäß aus beliebigen thermoplastischen Kunststoffen hergestellt werden. Bevorzugt werden Polyolefine, wie z.B. Polyethylen, Polypropylen, auch in flammfester Ausführung, sowie Polyvinylchlorid, nachchloriertes Polyvinylchlorid und Polyvinylidenfluorid.

## Patentansprüche

1. Verfahren zur Herstellung eines Kunststoff-Dachventilatorgehäuses, bestehend aus einem Gehäuseunterteil mit einem Flansch am oberen Rand und einem Gehäuseoberteil mit einem Flansch am unteren Rand, dadurch gekennzeichnet, daß man durch Rotationsgießen einen allseitig geschlossenen Gehäuseformling aus zusammengeformtem Gehäuseoberteil und Gehäuseunterteil bildet, den Gehäuseformling unter Bildung des Gehäuseunterteils und Gehäuseoberteils trennt und in die beiden Gehäuseteile die Anström- und Abströmöffnungen einschneidet.

2. Verfahren nach Anspruch 1, dadurch gekennzeichnet, daß man einen Gehäuseformling aus an ihren Flanschen verbundenem Gehäuseunterteil und Gehäuseoberteil bildet und die Verbindung zwischen den Flanschen beider Gehäuseteile trennt.

3. Verfahren nach Anspruch 1 oder 2, dadurch gekennzeichnet, daß man durch Rotationsgießen einen aus zwei an ihren unteren Rändern verbundenen Motorabdeckhauben bestehenden Haubenformling bildet, den Haubenformling in der Mitte unter Bildung von zwei Hauben trennt und eine Haube mittels eines Lüftungsrohres in dem Gehäuseoberteil anbringt.

4. Verfahren nach einem der Ansprüche 1 bis 3, dadurch gekennzeichnet, daß man beim Rotationsgießen in einen der Flansche Gewindebuchsen eingießt.

5. Dachventilatorgehäuse aus Kunststoff, bestehend aus einem Gehäuseunterteil (8) mit einer Anströmöffnung an der Unterseite und einem Flansch (2) am oberen Rand und einem Gehäuseoberteil (7) mit einer Abströmöffnung an der Oberseite und einem Flansch (2) am unteren Rand, dadurch gekennzeichnet, daß die beiden Gehäuseteile (7,8) Teile eines Rotationsgußkörpers (1) sind, in die anbzw. abströmseitige Öffnungen (20,21) eingeschnitten sind.

6. Dachventilatorgehäuse nach Anspruch 5, dadurch gekennzeichnet, daß der Rotationsgußkörper (1) aus den beiden im Bereich ihrer Flanschen (2) verbundenen Gehäuseteilen (7,8) besteht und die Gehäuseteile (7,8) die durch Trennung des Rotationsgußkörpers (1) zwischen den Flanschen (2) gebildeten Teile sind.

7. Dachventilatorgehäuse nach Anspruch 5 oder 6, dadurch gekennzeichnet, daß in dem Gehäuseoberteil (7) zwei einander diametral gegenüberliegende Öffnungen (22) ausgebildet sind, in denen ein Lüftungsrohr (6) aufgenommen ist, und eine als Rotationsgußkörper ausgebildete, in das Lüftungsrohr (6) mündende Motorabdeckhaube (13) in dem Gehäuseoberteil (7) angeordnet ist.

8. Dachventilatorgehäuse nach einem der Ansprüche 5 bis 7, dadurch gekennzeichnet, daß einer der Flansche (2) eingegossene Gewindebuchsen enthält.

## Claims

1. A process for manufacturing a synthetic roof ventilator housing, comprising of a lower housing part having a flange on the upper edge, and an upper housing part having a flange on the lower edge, characterised in that as a result of rotation casting, a moulded housing which is closed on all sides is formed from the moulded together housing upper part and housing lower part, the moulded housing is separated forming the housing lower part and housing upper part,and the inlet-and outlet openings are cut in the two housing parts.

2. A process according to claim 1, characterised in that a moulded housing is constructed from a housing lower part and a housing upper part, connected at their flanges, and the connection between the flanges is separated.

3. A process according to claims 1 or 2, characterised in that through rotation casting, a moulded hood comprising of two engine covering hoods connected at their lower edges is constructed, the moulded hood is separated in the centre, forming two hoods, and one hood is mounted by means of a ventilation tube in the housing upper part.

4. A process according to any of claims 1-3, characterised in that with rotation casting, threaded inserts are cast integral in one of the flanges.

5. A roof ventilator housing made from synthetic material, comprising a housing lower part (8) having an inlet opening on the lower side and a flange (2) on the upper edge, and a housing upper part (7) and an outlet opening on the upper side and a flange (2) on the lower edge, characterised in that the two housing parts (7,8) are parts of a rotation casting body (1), into which inlet or outlet openings (20,21) are cut.

6. A roof ventilation housing according to claim 5, characterised in that the rotation casting body is comprised of two housing parts (7,8) connected in the region of their flanges (2), and the housing parts (7,8) are the parts formed through separating the rotation casting body (1) between the flanges (2).

7. A roof ventilation housing according to claims 5 or 6, characterised in that two diametrically opposed openings (22) are constructed in housing upper part (7), in which a ventilation tube (6) is incorporated, and an engine covering hood (13), constructed as a rotation casting body and opening into ventilation tube (6), is mounted in housing upper part (7).

8. A roof ventilation housing according to any of claims 5-7, characterised in that one of the flanges (2) contains cast-integral threaded inserts.

## Revendications

1. Procédé de fabrication d'un boîtier pour ventilateur de toit en matière plastique, constitué d'une partie inférieure de boîtier avec une bride sur le bord supérieur et d'une partie supérieure de boîtier avec une bride sur le bord inférieur, **caractérisé** en ce qu'on forme par rotomoulage une ébauche de boîtier fermée de tous côtés, constituée d'une partie supérieure de boîtier et d'une partie inférieure de boîtier conjointement formées, on coupe en deux l'ébauche de boîtier, formant ainsi la partie inférieure de boîtier et la partie supérieure de boîtier, et on découpe dans les deux parties de boîtier les ouvertures de flux entrant et de flux sortant.

2. Procédé selon la revendication 1, **caractérisé** en ce qu'on forme une ébauche de boîtier constituée d'une partie inférieure de boîtier et d'une partie supérieure de boîtier assemblées par leurs brides, et on disjoint l'assemblage entre les brides des deux parties de boîtier.

3. Procédé selon la revendication 1 ou 2, **caractérisé** en ce qu'on forme par rotomoulage une ébauche de capot constitué de deux capots de recouvrement de moteur assemblés par leurs bords inférieurs, on coupe l'ébauche de capot en son milieu, formant ainsi deux capots, et on installe un capot au moyen d'un tuyau d'aération dans la partie supérieure de boîtier.

4. Procédé selon une des revendications 1 à 3, **caractérisé** en ce que, lors du rotomoulage, on scelle des douilles taraudées dans une des brides.

5. Boîtier pour ventilateur de toit en matière plastique, constitué d'une partie inférieure de boîtier (8) pourvue d'une ouverture de flux entrant sur le dessous et d'une bride (2) sur le bord supérieur, et d'une partie supérieure de boîtier (7) pourvue d'une ouverture de flux sortant sur le dessus et d'une bride (2) sur le bord inférieur, **caractérisé** en ce que les deux parties de boîtier (7, 8) sont des parties d'un corps (1) moulé par rotomoulage, dans lequel sont découpées des ouvertures respectives (20, 21) de flux entrant et de flux sortant.

6. Boîtier pour ventilateur de toit selon la revendication 5, **caractérisé** en ce que le corps (1) moulé par rotomoulage est constitué des deux parties de boîtier (7, 8) assemblées dans la région de leurs brides (2), et les parties de boîtier (7, 8) sont les parties formées par découpage du corps (1) moulé par rotomoulage entre les brides (2).

7. Boîtier pour ventilateur de toit selon la revendication 5 ou 6, **caractérisé** en ce que deux ouvertures diamétralement opposées (22), dans lesquelles est reçu un tuyau d'aération (6), sont formées dans la partie supérieure de boîtier (7), et un capot de recouvrement de moteur (13), réalisé sous forme de corps moulé par rotomoulage et débouchant dans le tuyau d'aération (6), est disposé dans la partie supérieure de boîtier (7).

8. Boîtier pour ventilateur de toit selon une des revendications 5 à 7, **caractérisé** en ce qu'une des brides (2) contient des douilles taraudées scellées dans la bride.
